# EUROPEAN PATENT SPECIFICATION

(11) **EP 1 231 069 B1**
(45) Date of publication and mention of the grant of the patent: **18.10.2006**
(21) Application number: 01303261.0
(22) Date of filing: 06.04.2001
(51) Int. Cl.: B41J 19/00, B41J 25/304, F16C 29/02, F16C 33/20

(54) **Carriage assembly of printer emplyoing movable print head**
Druckerwagenanordnung mit bewegbarem Druckkopf
Assemblage de chariot d'imprimante avec tête d'impression déplaçable

(30) Priority: 13.02.2001 KR 2001006980
(43) Date of publication of application: 14.08.2002
(73) Proprietor: SAMSUNG ELECTRONICS CO., LTD., Suwon-City, Kyungki-do (KR)
(72) Inventor: Park, Jin-ho, Giheung-eup, Yongin-city, Kyungi-do (KR)
(74) Representative: Chugg, David John

(56) References cited:
- EP-A- 1 013 457
- US-A- 5 332 321

## Description

The present invention relates to a printer employing a movable print head, and more particularly, to a carriage assembly of a printer employing a movable print head, which has an improved structure capable of minimizing unstable movement of the carriage, and error in the concentricity of contacting portions of the carriage and a guiding rod.

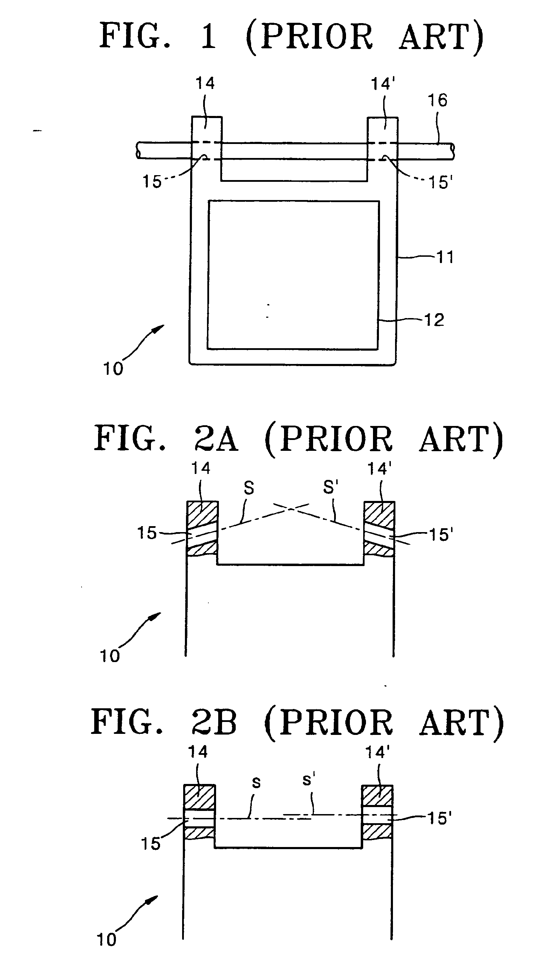

Figure 1 is a plan view illustrating a conventional carriage assembly for a cartridge having a movable print head.

Referring to Figure 1, a carriage assembly for a cartridge having a movable print head comprises a guiding rod 16, and a carriage 10 which is installed to be movable within a predetermined range along the guiding rod 16, and into which a cartridge having a print head 12 is installed.

The carriage 10 includes a main body 11 into which the print head 12 is installed, and bosses 14 and 14' extended from the main body 11 and provided with respective shaft holes 15 and 15' so that the guiding rod 16 can be installed to be spaced a predetermined distance from the main body 11 while passing through the shaft holes 15 and 15'.

Since the carriage 10 moves from side to side along the guiding rod 16, friction occurs between the carriage 11 and the guiding rod 16. Therefore, the carriage 11 and the guiding rod 16 are required to be made of wearproof materials having a low value of a coefficient of friction between them.

Therefore, resin additives of a relatively high price such as a fluoride additive, or the like are used to give high lubricity to a carriage usually formed by injection molding of a synthetic resin, and, actually, the whole body of a carrier is made of a high price material to give high lubricity to portions in which friction occurs.

In addition, even though the problem of lubricity is solved, the clearance between the guiding rod 16 and the shaft holes 15 and 15' of the carriage 10 must be minimized, and it is very difficult to align with each other the central axes of the two shaft holes 15 and 15' which are spaced a predetermined distance from each other.

Figure 2A is a sectional view illustrating disparity in the central axes of the shaft holes of a conventional carriage assembly, and Figure 2B is a sectional view illustrating error in the scan axes of the shaft holes of a conventional carriage assembly for a movable print head.

Referring to Figure 2A, the shaft hole 15 formed at the boss 14 has an axis S, and the shaft hole 15' formed at the boss 14' has an axis S', and the axes S and S' are not aligned with each other.

Referring to Figure 2B, the central axes s and s' of the shaft hole 15 formed at the boss 14 and the shaft hole 15' formed at the boss 14' are not aligned with each other.

As shown in Figures 2A and 2B, in the case that the carriage is formed by using a mold, the reason why the events of disparity and error in the central axes of the shaft holes 15 and 15' occur is due to a problem in injection molding using a mold.

In order to solve the problem, when the carriage 10 is made of a metallic material to align the axes of the shaft holes 15 and 15' with each other, it is undesirable that the weight of the carriage 10 which must move side to side repeatedly for printing becomes heavy, and, in addition, the load applied to the guiding rod (not shown) becomes greater. Therefore, the carriage made of a light resin is usually used.

Consequently, while the carriage is made of a resin material to which a highly lubricating additive is added, and the shaft holes are formed to be greater to a necessary minimum extent to allow the guiding rod to pass, at the same time, through the two shaft holes spaced a predetermined distance from each other, a fitting structure for appropriately fitting the guiding rod within the shaft holes must be adapted to prevent unsteady movement of the carriage.

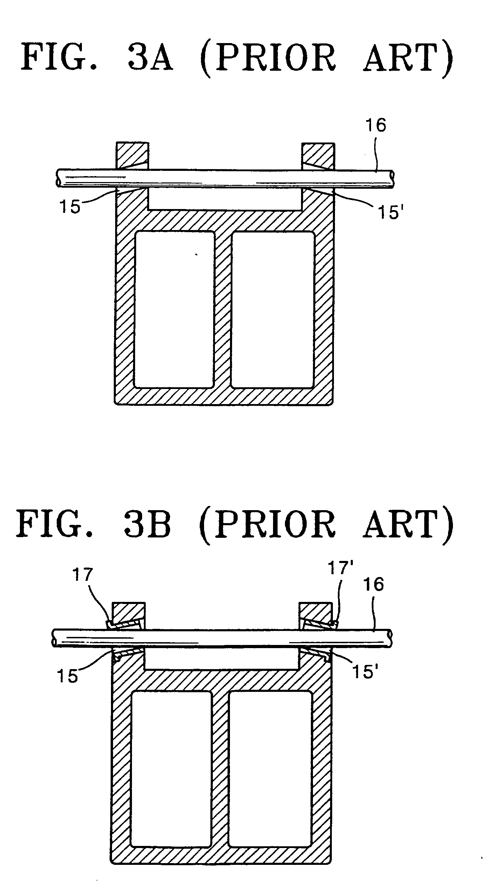

Examples of shaft holes provided with a fitting structure are shown in Figures 3A through 3C. Figure 3A shows an example in which shaft holes 15 and 15' are formed to be inclined at a predetermined angle while facing each other, and the scan axis of the shaft holes 15 and 15' is aligned with the axis of a guiding rod 16.

Figure 3B shows an example in which after bushes 17 and 17' are inserted into the respective shaft holes 15 and 15' shown in Figure 3A, the guiding rod 16 is installed to pass through the bushes 17 and 17'.

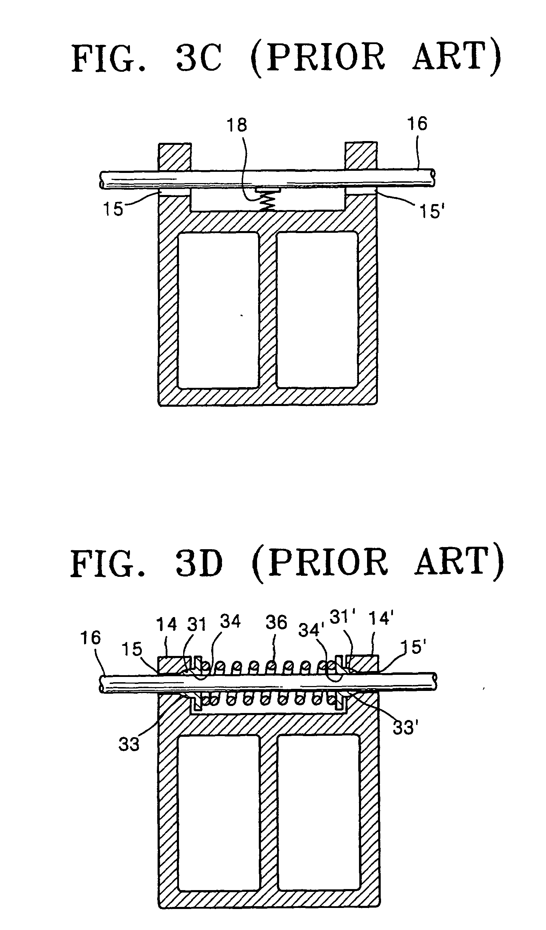

In addition, Figure 3C shows an example in which shaft holes 15 and 15' are formed so that the axes thereof can be parallel to each other, and a spring 18 for supporting a guiding rod 16 is installed so that the scan axis of the shaft holes 15 and 15' can be aligned with the guiding rod 16.

Another example of a fitting structure is shown in Figure 3D. The example shown in Figure 3D is disclosed in Korean Utility Model Patent No. 0142441 issued Jan. 14, 1999, Publication No. 1998-001748 (6 July 1998) filed by the applicant of this application.

Referring to Figure 3D, hemispherical grooves 31 and 31' are formed at inner sides of respective shaft holes 15 and 15' of bosses 14 and 14', and bearing bushes 33 and 33' having a shape corresponding to the hemispherical grooves 31 and 31' are inserted into the respective hemispherical grooves 31 and 31'. Shaft through-holes 34 and 34' through which a guiding rod 16 is inserted are formed through the bearing bushes 33 and 33'. In addition, a spring 36 is installed between the bearing bushes 33 and 33', and the bearing bushes 33 and 33' are supported by the elastic force of the spring 36 so that the bearing bushes 33 and 33' can be prevented from separating from the shaft holes 15 and 15'.

When a carriage has the above-described configuration, there are problems in which the manufacturing cost is high due to use of an additional spring, and the elastic force of the spring is weakened as the spring is used for a long time. In addition, since the hemispherical grooves are formed at inner sides facing each other of the bosses, another problem is that the structure of the mold is complicated when injection molding is employed, or machining of the hemispherical grooves is difficult when machining is employed.

US-A-5332321 discloses a printer carriage mountable on a pair of slider rods. A pair of plastic front bushings are mounted at opposite ends of a front slider rod channel on the underside of the carriage. Each front bushing comprises a C-shaped open section provided with axially extending spaced keys which abut mating keys in the carriage channel to prevent rotational movement of the bushings with respect to the carriage.

EP-A-1013457 discloses a printer carriage having a bushing liner arranged to slide on a rod. The liner comprises a metal body with plastic inserts having, on their inside surfaces, ribs, which constitute the bearings of the bushing liner. The external surface of the bushing liner comprises a plurality of flat and curved sections arranged asymmetrically to permit firm and accurate location in an aperture of the carriage.

With a view to solve or reduce the above problems, it is an aim of embodiments of the present invention to provide a carriage assembly of a printer employing a movable print head, which has an improved structure capable of reducing friction between a carriage and a guiding rod, and aligning the axes of the carriage and the guiding rod with each other.

According to a first aspect of the present invention, there is provided a carriage assembly for a printer for holding a cartridge having a print head, the carriage assembly including a carriage which is supported by a guiding rod provided on the printer, and which is installed to be movable within a predetermined distance along the guiding rod, the carriage assembly comprising: a plurality of bearing supporting portions provided at a side of the carriage and spaced a predetermined distance from each other, the bearing support portions comprising respective bearing supporting holes; and a plurality of bearing bushes installed in the respective bearing supporting holes of the bearing supporting portions, each bearing bush having an outer circumferential surface defining a portion of a sphere concentric with, and having a different predetermined radius of curvature smaller than, that of the bearing supporting hole so that the bearing bush can rotate freely in the bearing supporting hole, each bearing bush being provided with a shaft through-hole through which the guiding rod can pass slidably; characterised in that: each bearing supporting hole extends through the bearing supporting portion and has an inner circumferential surface which is formed to define a portion of a sphere having a predetermined radius of curvature.

Preferably, a supporting plate having supporting portions pressing the bearing bush for preventing the bearing bush installed in the bearing supporting hole from being separated from the bearing supporting hole is provided fastened to the bearing supporting portion, and an annular projection portion which projects between the supporting portions of the supporting plate is formed to surround the guiding rod.

Preferably, the supporting portions of the supporting plate have a predetermined elastic force so as to elastically press the bearing bush.

For a better understanding of the invention, and to show how embodiments of the same may be carried into effect, reference will now be made, by way of example, to the accompanying diagrammatic drawings in which:
Figure 1 is a plan view illustrating a conventional carriage assembly for a cartridge having a movable print head;
Figure 2A is a sectional view illustrating disparity in the central axes of shaft holes of a conventional carriage assembly;
Figure 2B is a sectional view illustrating error in the scan axes of the shaft holes of a conventional carriage assembly;
Figures 3A through 3D are sectional views illustrating examples of fitting structures for preventing unsteady movement of a carriage assembly;
Figure 4 is a perspective view illustrating a carriage assembly for a cartridge having a movable print head according to an embodiment of the present invention;
Figure 5 is an exploded perspective view of the carriage assembly shown in Figure 4;
Figure 6 is a sectional view of the carriage assembly shown in Figure 4;
Figure 7 is an enlarged view illustrating the portion A shown in Figure 6; and
Figure 8 is a diagram illustrating a mechanism allowing a bearing bush according to an embodiment of the present invention to freely rotate in a bearing supporting hole so that the scan axis of a carriage assembly can be aligned with the axis of a guiding rod.

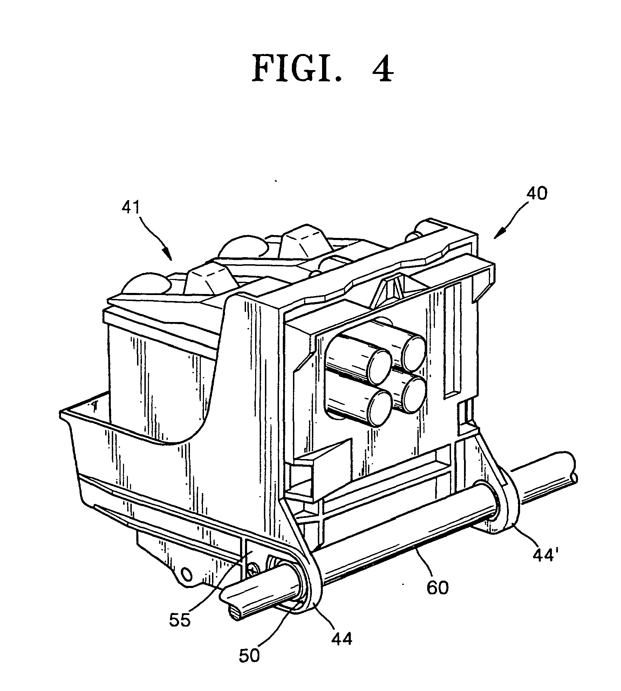

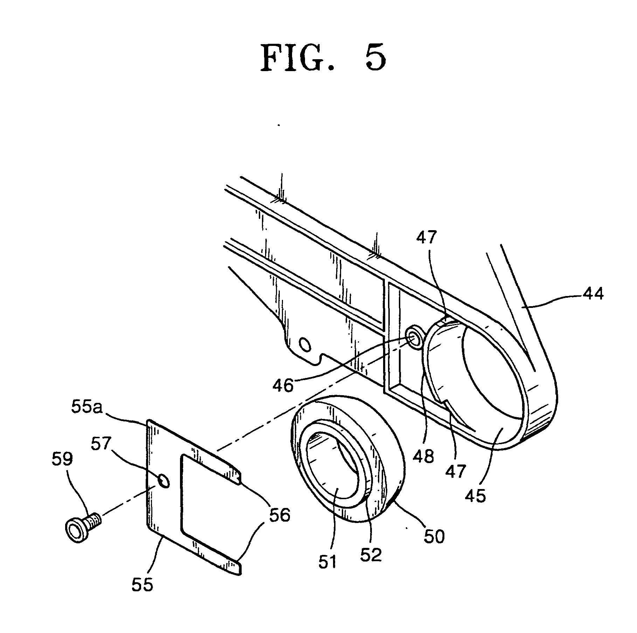

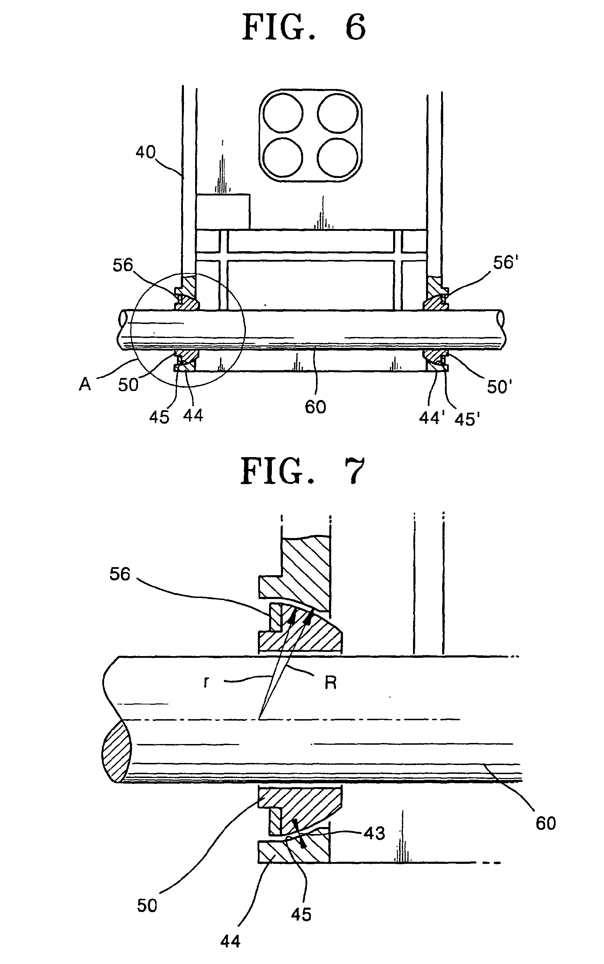

Figure 4 is a perspective view illustrating a carriage assembly for a cartridge having a movable print head according to an embodiment of the present invention, Figure 5 is an exploded perspective view of the carriage assembly shown in Figure 4, and Figure 6 is a sectional view of the carriage assembly shown in Figure 4.

Referring to Figures 4, 5, and 6, a carriage assembly according to the present invention includes a carriage 40 into which a cartridge 41 having a print head is inserted, bearing supporting portions 44 and 44' which are provided at a side of the carriage 40 to be spaced a predetermined distance from each other, and which comprise respective bearing supporting holes 45 and 45', bearing bushes 50 and 50' which are inserted into the bearing supporting holes 45 and 45', respectively, and can rotate freely, and supporting plates 55 and 55' having supporting portions 56 and 56' for pressing the bearing bushes 50 and 50' inserted into the bearing supporting holes 45 and 45' to prevent them from being separated from the bearing supporting holes 45 and 45'.

The bearing bush 50 is provided with a shaft through-hole 51 so that the guiding rod 60 can pass through the shaft through-hole 51, the outer circumferential surface thereof is formed to have a predetermined radius of curvature. The inner circumferential surface of the bearing supporting hole 45 is formed to have a different predetermined radius of curvature corresponding to the radius of curvature of the outer circumferential surface of the bearing bush 50, and the corresponding surfaces of the bearing bush 50 and the bearing supporting hole 45 make a spherical pair.

In addition, an annular projecting portion 52 which surrounds the guiding rod 60 so that the bearing bush 50 can be pressed by the supporting portions 56 of the supporting plate 55 is formed at the bearing bush 50. The bearing bush 50 is inserted into the bearing supporting hole 45.

The supporting plate 55 comprises a base 55a, and plate-spring type supporting portions 56 which are extending in parallel from both ends of the base 55a.

The supporting portions 56 are positioned to surround the annular projecting portion 52, and provide elastic forces so that the bearing bush 50 can be prevented from being separated from the bearing supporting hole 45, and, in addition, the bearing bush 50 through which the guiding rod 60 is inserted can rotate freely in the bearing supporting hole 45, and allow the scan axis of the carriage assembly to be aligned with the axis of the guiding rod 60.

Therefore, it is desirable that the supporting portions 56 of the supporting plate 55 have a predetermined elastic force to elastically press the bearing bush 50.

In addition, a screw passing hole 57 for allowing a screw 59 to pass through it is formed through the base 55a of the supporting plate 55 so that the supporting plate 55 can be fastened to the bearing supporting portion 44 by screwing the screw 59 into a threaded hole 46 formed at the bearing supporting portion 44.

In addition, recessed portions 47 having a predetermined depth are formed at an outer circumferential surface 48 of the bearing supporting hole 45 so that the supporting portions 56 can be installed at the bearing supporting portion 44 and press the bearing bush 50. Therefore, the supporting portions 56 of the supporting plate 55 are installed in the recessed portions 47 to surround the annular projecting portion 52of the bearing bush 50.

Figure 7 is an enlarged sectional view of the portion A shown in Figure 6.

Referring to Figure 7, it is preferable that the inner radius R of the bearing supporting hole 45 is formed to be greater than the outer radius r of the bearing bush 50 so that the bearing supporting hole 45 can be spaced a predetermined distance from the bearing bush 50. This is intended to allow the bearing bush 50 to freely rotate with respect to the bearing supporting hole 45 so that the scan axis of the carriage assembly can be aligned with the axis of the guiding rod 60.

In the carriage assembly of a printer configured as described above according to the present invention, a mechanism in which the scan axis of the carriage assembly is aligned with the axis of the guiding rod 60 will be described as follows.

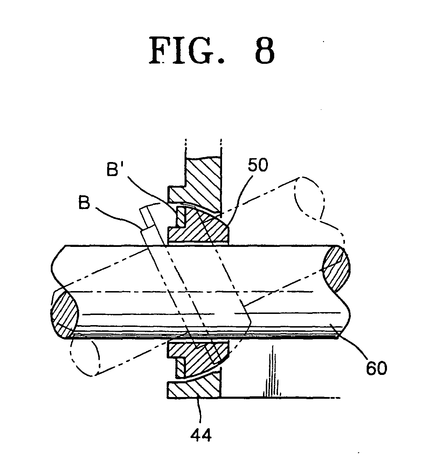

Figure 8 is a diagram illustrating a mechanism allowing a bearing bush to freely rotate in a bearing supporting hole so that the scan axis of a carriage assembly can be aligned with the axis of a guiding rod.

Referring to Figures 5 and 8, the carriage 40 is moved along the guiding rod 60 by a drive system (not shown). At this time, the bearing bush 50 through which the guiding rod 60 is inserted can rotate in the bearing supporting hole 45. Therefore, even when the bearing supporting hole 45 is erroneously machined to some extent, the scan axis of the carriage assembly 40 can be aligned with the axis of the guiding rod 60.

That is, even when the bearing supporting holes 45 and 45' are erroneously machined to receive the respective bearing bushes 50 and 50' correctly, since the bearing bushes 50 and 50' has a predetermined radius of curvature corresponding to that of the bearing supporting holes 45 and 45', and the bearing bushes 50 and 50' can rotate freely from a state B shown in dotted lines to a state B' shown in solid lines, the scan axis of the carriage assembly can be aligned with the axis of the guiding rod 60.

Therefore, the carriage assembly of a printer having a structure as described above has a simple structure and the manufacturing cost thereof is low. In addition, since unsteady movement of the carriage can be lowered, and the scan axis of the carriage assembly can be aligned with the axis of the guiding rod automatically, error in the axes of the carriage assembly and the guiding rod can be lowered markedly.

As described above, since the bearing bushes having a predetermined radius of curvature can rotate freely in the respective bearing supporting holes having a different but corresponding radius of curvature, and the scan axis of the carriage assembly can be aligned with the axis of the guiding rod automatically even when the bearing supporting holes are erroneously machined, the manufacturing cost of the carriage assembly according to the present invention is low, and unsteady movement of the carriage assembly can be lowered markedly.

Although a few preferred embodiments have been shown and described, it will be appreciated by those skilled in the art that various changes and modifications might be made without departing from the scope of the invention, as defined in the appended claims.

## Claims

1. A carriage assembly for a printer for holding a cartridge (41) having a print head, the carriage assembly including a carriage (40) which is adapted to be supported by a guiding rod (60) provided on the printer, and which is adapted to be installed in the printer so as to be movable within a predetermined distance along the guiding rod (60), the carriage assembly comprising:
a plurality of bearing supporting portions (44, 44') provided at a side of the carriage (40) and spaced a predetermined distance from each other, the bearing support portions (44, 44') comprising respective bearing supporting holes (45, 45'); and
a plurality of bearing bushes (50, 50') installed in the respective bearing supporting holes (45, 45') of the bearing supporting portions (44, 44'), each bearing bush (50, 50') having an outer circumferential surface defining a portion of a sphere concentric with, and having a different predetermined radius of curvature smaller than, that of the bearing supporting hole (45, 45') so that the bearing bush (50, 50') can rotate freely in the bearing supporting hole (45,45'), each bearing bush (50, 50') being provided with a shaft through-hole (51) through which the guiding rod (60) can pass slidably;
**characterised in that**:
each bearing supporting hole (45, 45') extends through the bearing supporting portion (44,44') and has an inner circumferential surface which is formed to define a portion of a sphere having a predetermined radius of curvature.

2. The carriage assembly claimed in claim 1, wherein a supporting plate (55, 55') having supporting portions (56, 56') pressing the bearing bush (50, 50') for preventing the bearing bush (50, 50') installed in the bearing supporting hole (45, 45') from being separated from the bearing supporting hole (45, 45') is provided fastened to the bearing supporting portion (44, 44'), and an annular projection portion (52) which projects between the supporting portions (56, 56') of the supporting plate (55, 55') is formed on the bearing bush to surround the guiding rod (60).

3. The carriage assembly claimed in claim 1, wherein the supporting portions (56, 56') of the supporting plate (55, 55') have a predetermined elastic force so as to elastically press the bearing bush (50, 50').

## Patentansprüche

1. Druckerwagenanordnung zum Halten einer Kartusche (41) mit einem Druckkopf, wobei die Wagenanordnung einen Wagen (40) enthält, der dazu eingerichtet ist, von einer am Drucker zur Verfügung gestellten Führungsstange (60) getragen zu werden, und der eingerichtet ist, in dem Drucker so angebracht zu werden, dass er sich innerhalb einer vorgegebenen Strecke entlang der Führungsstange (60) bewegen kann, wobei die Wagenanordnung umfasst:
eine Vielzahl von tragenden Lagerabschnitten (44, 44'), die an einer Seite des Wagens (40) vorgesehen und mit einem vorgegebenen Abstand zueinander versehen sind, wobei die tragenden Lagerabschnitte (44, 44') jeweils tragende Lageröffnungen (45, 45') umfassen; und
eine Vielzahl von tragenden Buchsen (50, 50'), die in den jeweiligen tragenden Lageröffnungen (45, 45') der tragenden Lagerabschnitte (44,44') angebracht sind, wobei jede tragende Buchse (50, 50') eine Außenumfangsfläche aufweist, die einen Kugelabschnitt definiert, der konzentrisch ist mit und einen anderen vorgegebenen, kleineren Krümmungsradius besitzt als der der tragenden Lageröffnung (45, 45'), sodass sich die tragende Buchse (50, 50') frei in der tragenden Lageröffnung (45, 45') drehen kann, wobei jede tragende Buchse (50, 50') mit einer axialen Durchgangsbohrung (51) versehen ist, durch die die Führungsstange (60) verschiebbar durchgehen kann;
**dadurch gekennzeichnet, dass**
jede tragende Lageröffnung (45, 45') sich durch den tragenden Lagerabschnitt (44, 44') erstreckt und eine Innenumfangsfläche aufweist, die so ausgebildet ist, dass sie einen Kugelabschnitt definiert, der einen vorgegebenen Krümmungsradius aufweist.

2. Wagenanordnung nach Anspruch 1, bei der eine Halteplatte (55, 55') mit Halteabschnitten (56, 56'), die auf die tragende Buchse (50, 50') Druck ausüben, um zu verhindern, dass die in der tragenden Lageröffnung (45, 45') angebrachte tragende Buchse (50, 50') von der tragenden Lageröffnung (45, 45') getrennt wird, vorgesehen und am tragenden Lagerabschnitt (44, 44') befestigt ist, und ein ringförmiger Überstand (52), der zwischen den Halteabschnitten (56, 56') der Halteplatte (55, 55') vorsteht, ist an der tragende Buchse (50, 50') so ausgebildet, dass er die Führungsstange (60) umschließt.

3. Wagenanordnung nach Anspruch 1, bei der die Halteabschnitte (56, 56') der Halteplatte (55, 55') eine vorgegebene Federkraft aufweisen, so dass sie die tragende Buchse (50, 50') elastisch andrücken.

## Revendications

1. Ensemble de chariot pour une imprimante pour contenir une cartouche (41) comportant une tête d'impression, l'ensemble de chariot comprenant un chariot (40) qui est adapté pour être supporté par une tige de guidage (60) prévue sur l'imprimante, et qui est adapté pour être installé dans l'imprimante de manière à être mobile sur une distance prédéterminée le long de la tige de guidage (60), l'ensemble de chariot comprenant :
une pluralité de parties de support de palier (44, 44') prévues d'un côté du chariot (40) et espacées d'une distance prédéterminée les unes des autres, les parties de support de palier (44, 44') comprenant des trous de support de palier (45, 45') respectifs ; et
une pluralité de coussinets de palier (50, 50') installés dans les trous de support de palier (45, 45') respectifs des parties de support de palier (44, 44'), chaque coussinet de palier (50, 50') comportant une surface circonférentielle extérieure définissant une partie d'une sphère concentrique avec celle du trou de support de palier (45, 45'), et ayant un rayon de courbure prédéterminé différent inférieur à celui de celle-ci, de sorte que le coussinet de palier (50, 50') puisse tourner librement dans le trou de support de palier (45, 45'), chaque coussinet de palier (50, 50') étant pourvu d'un trou traversant d'arbre (51) à travers lequel la tige de guidage (60) peut passer de manière coulissante ;
**caractérisé en ce que** :
chaque trou de support de palier (45, 45') s'étend à travers la partie de support de palier (44, 44') et comporte une surface circonférentielle intérieure qui est formée de manière à définir une partie d'une sphère ayant un rayon de courbure prédéterminé.

2. Ensemble de chariot selon la revendication 1, dans lequel une plaque de support (55, 55') comportant des parties de support (56, 56') pressant le coussinet de palier (50, 50') pour éviter que le coussinet de palier (50, 50') installé dans le trou de support de palier (45, 45') ne soit séparé du trou de support de palier (45, 45') est prévue fixée à la partie de support de palier (44, 44'), et une partie annulaire saillante (52) qui fait saillie entre les parties de support (56, 56') de la plaque de support (55, 55') est formée sur le coussinet de palier de manière à entourer la tige de guidage (60).

3. Ensemble de chariot selon la revendication 1, dans lequel les parties de support (56, 56') de la plaque de support (55, 55') ont une force élastique prédéterminée de manière à presser élastiquement le coussinet de palier (50, 50').
